# EUROPÄISCHE PATENTSCHRIFT

(11) **EP 3 391 493 B1**
(45) Veröffentlichungstag und Bekanntmachung des Hinweises auf die Patenterteilung: **06.12.2023**
(21) Anmeldenummer: 18701139.0
(22) Anmeldetag: 17.01.2018
(51) Int. Cl.: H02J 3/32, H02J 7/02, A47J 31/52, H02J 9/06, A47J 31/44

(54) **GETRÄNKEBEREITER ZUR ZUBEREITUNG VON HEISSGETRÄNKEN UND VERWENDUNG HIERVON**
DRINK PREPARATION MEANS FOR PREPARING HOT DRINKS AND USE THEREOF
DISPOSITIF DE PRÉPARATION DE BOISSONS POUR LA PRÉPARATION DE BOISSONS CHAUDES ET UTILISATION CORRESPONDANTE

(30) Priorität: 20.01.2017 DE 102017200950
(43) Veröffentlichungstag der Anmeldung: 24.10.2018
(73) Patentinhaber: WMF GmbH, 73312 Geislingen/Steige (DE)
(72) Erfinder: KIEFER, Alexander, 73329 Kuchen (DE); STARTZ, Armin, 89197 Weidenstetten (DE)
(74) Vertreter: Pfenning, Meinig & Partner mbB
(86) Internationale Anmeldenummer: PCT/EP2018/051062
(87) Internationale Veröffentlichungsnummer: WO 2018/134223

(56) Entgegenhaltungen:
- EP-A1- 1 686 879
- EP-A1- 2 625 989
- DE-A1-102008 030 541
- DE-A1-102008 052 190

## Beschreibung

Es wird ein Getränkebereiter zur Zubereitung von Heißgetränken bereitgestellt, der einen Anschluss für ein externes Stromnetz mit einer ersten elektrischen Leistung, mindestens eine wiederaufladbare Speichereinheit für elektrische Energie mit einer zweiten elektrischen Leistung, einen Transformator, der elektrisch mit dem Anschluss für ein externes Stromnetz und mit der wiederaufladbare Speichereinheit für elektrische Energie verbunden ist und mindestens einen elektrischen Hochleistungsverbraucher zur Erhitzung von Wasser enthält, wobei der mindestens eine elektrische Hochleistungsverbraucher eine elektrische Verbindung zur wiederaufladbaren Speichereinheit für elektrische Energie aufweist und von dieser mit elektrischer Energie versorgt wird. Mit dem erfindungsgemäßen Getränkebereiter können an dem Hochleistungsverbraucher dauerhaft sehr hohe Leistungen bereitgestellt werden, wobei das externe Stromnetz nicht temporär durch hohe Leistungsspitzen belastet wird. Vielmehr kann aus dem externen Stromnetz eine gleichmäßige Abnahme einer relativ niedrigen elektrischen Leistung erfolgen, um die mindestens eine wiederaufladbare Speichereinheit des Getränkebereiters zu laden und sicherzustellen, dass diese dauerhaft dazu geeignet ist, hohe elektrische Leistungen an dem Hochleistungsverbraucher bereitzustellen.

Vorrichtungen zur Zubereitung von Getränken enthalten gewöhnlich eine Vielzahl an elektrischen Verbrauchern. Hierbei sind leistungsintensive Verbraucher (z.B. Heizungen für Boiler, Heizungen für Dampfkessel oder Durchlauferhitzer) in der Regel an der primärseitigen Stromversorgung angeschlossen. Zur Ausgabe von heißen Getränken werden dabei oft Leistungen von mehreren Kilowatt benötigt. In Gastronomie-Kaffeemaschinen wird beispielsweise Teewasser in Geschwindigkeiten um die 30 ml/s ausgegeben. Zusätzlich findet oft eine parallele Ausgabe von beispielsweise Brühwasser und auch Wasserdampf (z.B. für das Schäumen von Milch) statt.

Nimmt man von allen diesen Verbrauchern die Summe der zu einem bestimmten Zeitpunkt ausgegebenen Energie wird deutlich, dass diese deutlich über der typisch verfügbaren Netzanschlussleistung an den Aufstellorten liegt. Diese beträgt z.B. in Mitteleuropa bei einem üblichen Hausanschluss und der Verwendung einer Phase rund 3 kW. Die Ausgabe derartig großer Mengen an Energie wird somit nur dadurch ermöglicht, dass große Mengen an Energie mittels Massen an Heißwasser oder unter Druck stehendem überhitztem Wasser in Boiler und Dampfkesselsysteme zwischengespeichert werden.

Beispielsweise muss das Brühwasser einer Kaffeemaschine als Getränkebereiter von einer Zulaufwassertemperatur (meist 15°C) auf 90°C (Brühwassertemperatur) erhitzt werden. Eine durchschnittliche Tasse Kaffee misst 125 ml. Für eine Brühung einer einzelnen Tasse ist damit eine Energiemenge von 40 kJ notwendig. Wird eine durchschnittliche Brühzeit von 20 Sek. angesetzt, so wird bei einem Getränkebereiter ohne Energiespeicher (z.B. ohne Heißwasserspeicher) ein Heizelement (z.B. ein Durchlauferhitzer) benötigt, das ohne Hilfe eine Heizleistung von ca. 2 kW bereitstellen kann. Wird nun zeitgleich 200 ml Heißwasser in ein Teewasserglas bei schnellen 25 ml/s Ausgabegeschwindigkeit bezogen, so sind dafür weiter 63,6 kJ Heizenergie und somit 8 kW Heizleistung erforderlich. Es versteht sich, dass diese elektrische Leistung von zusammen 10 kW nicht an einem herkömmlichen 1-Phasen-Netzanschluss mit einer maximalen Anschlussleistung von 3 kW bezogen werden kann.

Eine Möglichkeit zur Lösung des Problems, die im Stand der Technik Anwendung findet, sind thermische Energiepuffer (z.B. in Form von Heißwasserspeichern). Diese werden beispielsweise in Kaffeemaschinen mit Durchlauferhitzer eingesetzt, um die unmittelbar beim Bezug des Getränks erforderliche Energiemenge zu reduzieren. Energiepuffer wie Heißwasserspeicher müssen bei Betriebsbeginn aufgeheizt werden und geben während dem Betrieb Wärmeenergie durch Strahlung und Konvektion ab. Nachteilig hierbei ist, dass die thermischen Energiepuffer eine hohe Masse aufweisen (z.B. ein großes Wasservolumen) und ihre gespeicherte (Rest-)Energie nach dem Ausschalten des Getränkebereiters, z.B. nach dessen täglichem Betriebsende, langsam an die Umgebung abgeben wird. Große Kaffeemaschinen haben hier nicht selten einen Wasservorrat von größer als 2 Litern Speicherinhalt, was allein für den Aufheizvorgang des Wassers bereits ca. 636 kJ an Energie benötigt. Diese Energie geht nach dem Ausschalten der Kaffeemaschine verloren.

In Getränkebereiter sind auch elektrische Verbraucher integriert, die typischerweise sekundärseitig angeschlossen sind. Für den Betrieb dieser Komponenten sind Transformatoren (kurz: Trafos) oder Schaltnetzteile notwendig, die die primärseitige Netzspannung in Niederspannung wandeln. Dabei muss das Schaltnetzteil oder der Trafo in der Größe so dimensioniert sein, dass sämtliche parallel laufenden elektrischen Verbraucher gleichzeitig angesteuert werden können. Da insbesondere DC-Motoren einen deutlich höheren Anlaufstrom besitzen wie deren Nennstrom, müssen die Trafos deutlich überdimensioniert sein oder ein Energiemanagement in der zentralen Steuereinheit des Getränkebereiters dafür sorgen, dass sich diese Einschaltzeiten nicht überlagern und zu einer Überlastung des Schaltnetzteil oder Trafos führen.

Die elektrischen Verbraucher können Niederspannungsverbraucher sein. Beispielsweise arbeiten die CPUs, welche Getränkebereiter steuern, ausschließlich mit Niederspannung (in der Regel bei 3,3 V bis 5 V). Aus Gründen der Sicherheit werden solche Niederspannungsverbraucher in den Getränkebereiteren mit 12 V bis 60 V DC-Niederspannung versorgt. Sowohl für die Steuerungen und die Ansteuerung der Verbraucher, wie auch die elektrische Energieversorgung für die Niederspannungskomponenten werden Trafos, Netzteile und/oder Schaltnetzteile eingesetzt, welche die primärseitige Spannung in eine sekundärseitige Sicherheitskleinspannung transformieren.

Je höher die von dem Getränkebereiter benötigte Gesamtleistung ist, desto höher ist allerdings der Raumbedarf im Inneren des Getränkebereiters, um die Trafos, Netzteile und/oder Schaltnetzteile unterzubringen. Ferner steigen zur erforderlichen Leistung proportional auch die Anforderungen an diese Elemente, um die erforderlichen Sicherheitsnormen zu erfüllen. Es ist daher wünschenswert, bei einer vorgegebenen Größe des Getränkebereiters im Inneren des Getränkebereiters möglichst viel Raum für solche Elemente zur Verfügung zu haben.

Ferner sind Getränkebereiter aus dem Stand der Technik aufgrund ihrer internen Schaltkreise nicht dazu geeignet, eine elektrische Heizleistung bei Betrieb über ein externes Stromnetz (Netzbetrieb) zu erzeugen, welche die maximal entnehmbare Leistung des externen Stromnetzes übersteigt.

Viele elektrische Verbraucher in Getränkebereitern aus dem Stand der Technik sind für die Ausgabe eines Heißgetränks oft nur wenige Sekunden in Betrieb mit teilweise noch kurzzeitigeren Spitzenströmen. Schaltnetzteile und/oder Trafos müssen auf diese hohen Ströme ausgelegt sein, obwohl diese regelmäßig nur sehr kurzzeitig in Gebrauch sind. Dies vergrößert neben dem Bauraum der Maschine auch den notwendigen Ressourceneinsatz zur Herstellung solcher Trafos.

Ferner ist es bekannten Getränkebereitern beim Netzbetrieb nicht ohne Einschränkungen erlaubt, auf schnelle Art und Weise kurze Heizleistungsspitzen (z.B. an einem Wassererhitzer) zu erzeugen, da hierfür sehr schnell schaltbare Stromimpulse nötig sind. Der Grund hierfür ist, dass die schnell schaltbaren Stromimpulse Rückwirkungen auf die Netzspannung ausüben. Die Rückwirkung auf das Stromnetz wiederum verursacht unterschiedliche Beleuchtungsstärken (Flicker) bei Leuchten im Stromnetz. Grenzwerte und Prüfungen für diese Auswirkungen sind in Normen beschrieben (z.B. DIN EN 61000-3-3).

Es besteht somit ein Bedarf an einem Getränkebereiter, der dauerhaft und in schonender Weise für das externe Stromnetz eine elektrische Ausgabeleistung für Hochleistungsverbraucher (z.B. eine Heizung) zur Verfügung stellen kann, die höher ist als die dem externen Stromnetz maximal entnehmbare elektrische Leistung.

Darüberhinaus wird der Komfort zur Bedienung von Getränkebereiter den Benutzern immer wichtiger. So sollen die Getränkebereiter von der Ferne bzw. über einen Zeitschalter zu einem gewünschten Zeitpunkt eingeschaltet, bedient, ausgeschaltet werden können und jederzeit erreichbar sein. Zur Absenkung des Stromverbrauchs im "Stand-by"-Zustand des Getränkebereiters müssen hierzu zusätzliche kleinen Trafos oder Schaltnetzteile eingesetzt werden, welche permanent die Steuerung des Getränkebereiters mit Energie für ein "Wake on LAN" versorgen. Es besteht somit zudem Bedarf im Stand der Technik an einem Getränkebereiter, der im "Stand-by"-Zustand keine Leistung vom Stromnetz aufnehmen muss und damit in diesem Zustand das Stromnetz entlastet. Zusätzlich sollen solche Getränkebereiter dann auch (unabhängig der aktuellen Einschaltzustands) für eine Fernwartung auch ohne einen definierten Ein-Zustand jederzeit erreichbar sein.

Die DE 10 2007 012 231 B3 beschreibt einen mobilen Heißwasserautomat, wobei heißes Wasser in einem Vorratsbehälter durch die Energie aus einer Kombination von Brennstoffzelle und einem Akkumulator bereitgestellt wird. Der Akkumulator stellt dabei die nötige Energie für einen kurzfristigen, hohen Energiebedarf bereit und die Brennstoffzelle wird dazu verwendet, den Ackumulator wieder aufzuladen. Dieser Heißwasserautomat hat durch den eingebauten Wassertank ein hohes Gewicht und zudem muss viel Energie aufgewendet werden, das in den Wassertanks befindliche Wassers auf die gewünschte Temperatur zu heizen. Diese Energie wird nach Ende des Betriebs an die Umgebung abgegeben und ist damit verloren, d.h. steht nicht mehr zur Zubereitung von Getränken zur Verfügung.

Die US 6,123,010 A beschreibt ebenfalls einen mobilen Getränkebereiter, wobei heißes Wasser in einem Vorratsbehälter durch die Energie aus einem Ackumulator, Netzanschluss, Zigarettenanzünder, Windgenerator oder Solarmodul bereitgestellt wird. Nachteilig hieran ist, dass der Getränkebereiter durch den Wasservorratsbehälter ein hohes Gewicht hat und das Wasser innerhalb des Tanks zunächst langwierig durch die Energiequelle aufgeheizt werden muss, damit der Getränkebereiter betriebsbereit ist. Die Energie, die in dem aufgeheizten Wasser steckt, geht nach während einer Nutzungspause des Getränkebereiters verloren.

Die EP 1 852 043 A beschreibt eine Kaffeemaschine, die autonom ohne externe Stromquelle über Strom aus Akkumulatoren und Brennstoffzellen betrieben wird.

Die DE 10 2008 052 190 A1 beschreibt einen unabhängig vom externen Stromnetz (autark) betreibbaren Getränkebereiter, der einen Durchlauferhitzers zum Erhitzen von Wasser enthält, wobei der Durchlauferhitzer ausschließlich elektrische Energie aus einem Akkumulator bezieht. Der Akkumulator weist eine im Vergleich zur Ladeleistung (ca. 50 W) höhere Entladeleistung (mehr als 500 W) auf. Dadurch ist die Brühzeit bei Akkumulatorbetrieb vergleichbar zu einer Brühzeit bei Netzbetrieb. Dieser Getränkebereiter hat jedoch den Nachteil, dass er nur entweder durch Energie aus einem externen Stromnetz (Netzbetrieb) oder durch Energie aus einem Akkumulator (Akkumulatorbetrieb) betrieben werden kann. Die am Durchlauferhitzer anliegende Heizleistung ist somit in der Höhe und in der Dauer durch den Akkumulator begrenzt, was vor allem in lang anhaltenden, starken (hochfrequenten) Bezugsperioden am Getränkebereiter zu mangelnder Heizleistung am Durchlauferhitzer und damit zu Qualitätseinbußen des zubereiteten Getränks bis hin zu Betriebsausfällen führen kann.

Die EP1686879B1 zeigt einen weiteren unabhängig vom externen Stromnetz (autark) beitreibbaren Getränkebereiter.

Ausgehend hiervon war es die Aufgabe der vorliegenden Erfindung, einen Getränkebereiter bereitzustellen, der in einer möglichst kompakten Bauweise ausgestaltet werden kann und der erlaubt, ohne hohe temporäre Belastungsspitzen auf das externe Stromnetz sehr hohe elektrische Leistungen für elektrische Hochleistungsverbraucher zur Erhitzung von Wasser bereitzustellen.

Die Aufgabe wird gelöst durch die Vorrichtung mit den Merkmalen von Anspruch 1 und die Verwendung mit den Merkmalen von Anspruch 15. Die abhängigen Ansprüche zeigen vorteilhafte Ausgestaltungen auf.

Erfindungsgemäß wird ein Getränkebereiter zur Zubereitung von Heißgetränken nach Anspruch 1 bereitgestellt.

Der erfindungsgemäße Getränkebereiter zeichnet sich dadurch aus, dass er auch kurzfristig sehr hohe Heizleistungen am elektrischen Hochleistungsverbraucher zur Erhitzung von Wasser generieren kann und dabei keinen Energiespeicher in Form eines Heißwasserspeichers benötigt. Anders ausgedrückt können begrenzte Mengen Heißwasser in sehr kurzer Zeit bereitgestellt werden, ohne dass hierfür massereiche Energiespeicher (Wasserspeicher, Massespeicher allgemein, etc.) erforderlich wären. Der erfindungsgemäße Getränkebereiter weist daher keine Energieverluste durch massereiche thermische Energiespeicher auf und kann somit energieökonomischer (und damit auch ökologischer) betrieben werden als herkömmliche Getränkebereiter, die auf solche massereichen Energiespeicher angewiesen sind. Ferner kann der Getränkebereiter in einer kompakteren Bauweise realisiert werden.

Zudem ist mit dem erfindungsgemäßen Getränkebereiter selbst im Falle einer kleinen oder unzuverlässigen Netzversorgung ein Betrieb möglich, da die wiederaufladbare Speichereinheit für elektrische Energie eine kleine Netzversorgung oder Phasen der Unterversorgung über das externe Netz überbrücken kann. In diesem Zusammenhang ist mit dem erfindungsgemäßen Getränkebereiter auch sichergestellt, dass in Phasen starken (hochfrequenten) Getränkebezugs die Bereitstellung von (Heiß-)Getränken ohne Ausfallzeiten möglich ist. Darüberhinaus können Spannungsschwankungen ("Flicker") im externen Stromnetz vermieden werden, da der mindestens eine elektrische Hochleistungsverbraucher zur Erhitzung von Wasser des erfindungsgemäßen Getränkebereiters seine elektrische Energie nicht direkt aus dem externen Stromnetz bezieht, sondern intern über die mindestens eine wiederaufladbare Speichereinheit für elektrische Energie. Die wiederaufladbare Speichereinheit für elektrische Energie belastet bei ihrem Ladevorgang das Stromnetz gleichmäßig und schnellen Heizleistungsspitzen belasten lediglich die wiederaufladbare Speichereinheit, aber nicht das externe Stromnetz. Insofern hat die wiederaufladbare Speichereinheit eine ausgleichende Wirkung ("Pufferwirkung") gegenüber dem externen Stromnetz.

Der erfindungsgemäße Getränkebereiter kann dadurch gekennzeichnet sein, dass der Anschluss für das elektrische Stromnetz
i) ein Anschluss für ein Wechselstromnetz ist, bevorzugt ein Wechselstromnetz mit einer Wechselspannung je Phase im Bereich von 100 V bis 255 V und besonders bevorzugt mit einer Frequenz von 50 bis 60 Hz.

Der Getränkebereiter kann mindestens einen Laderegler enthalten, der dazu ausgelegt ist, eine am Anschluss für ein externes Stromnetz anliegende Spannung derart zu wandeln, dass der mindestens eine elektrische Energiespeicher (optional auch mindestens ein weiterer elektrischer Energiespeicher) geladen werden kann. Der Laderegler kann eine elektrische Verbindung zu dem Anschluss für ein externes Stromnetz aufweisen. Ferner kann der Laderegler eine elektrische Verbindung zu der wiederaufladbare Speichereinheit für elektrische Energie aufweisen. Zudem kann der Laderegler dazu geeignet sein, Wechselspannung in Gleichspannung, optional in eine pulsierende oder geglättete Gleichspannung, umzuwandeln.

Eine bevorzugte Ausgestaltungsform zeichnet sich dadurch aus, dass die wiederaufladbare Speichereinheit für elektrische Energie dazu geeignet ist, Gleichspannung bereitzustellen, insbesondere eine Spannung von 5 bis 100 V, bevorzugt 10 bis 60 V, besonders bevorzugt 15 bis 42 V (Sicherheitskleinspannung), insbesondere Sicherheitskleinspannung im Bereich von 24 bis 40 V, bereitzustellen. Dies hat den Vorteil, dass sich bei der Bedienung und auch Wartung des Getränkebereiters deutlich weniger Gefahren für die beteiligten Personen ergeben, einem gesundheitsgefährlichen elektrischen Stromschlag ausgesetzt zu werden. Folglich ist die Sicherheit für Servicetechniker im Falle einer Reparaturmaßnahme an dem Getränkebereiter verbessert und die Maßnahmen zur elektrischen Isolation des Getränkebereiters sinken deutlich. Wollte man beispielsweise einen elektrischen Hochleistungsverbraucher zur Erhitzung von Wasser im Niederspannungsbereich nur über ein externes Stromnetz und nicht über einen wiederaufladbaren Energiespeicher für elektrische Energie betreiben, so wären mehrere Kilowatt im Niederspannungsbereich und damit sehr große Transformatoren nötig. Eine Integration solcher Transformatoren ist erfindungsgemäß nicht nötig, wodurch die Kosten für den Getränkebereiter gesenkt werden, der Getränkebereiter kompakter ausgestaltet werden kann und Heizleistungen abgerufen werden können, welche die maximal mögliche Heizleistung transformierter Netzspannung deutlich übersteigen.

In einer bevorzugten Ausgestaltungsform ist die wiederaufladbare Speichereinheit für elektrische Energie dazu geeignet, eine elektrische Leistung abzugeben, die mindestens dem 4-fachen, ganz besonders bevorzugt mindestens dem 6-fachen, insbesondere mindestens dem 8-fachen, optional mindestens dem 10-fachen, der ersten elektrischen Leistung entspricht.

Ferner kann die wiederaufladbare Speichereinheit für elektrische Energie dazu geeignet sein, eine elektrische Leistung von mehr als 12 kW, insbesondere mindestens 20 kW, optional mindestens 30 kW bereitzustellen.

Darüberhinaus kann die wiederaufladbare Speichereinheit für elektrische Energie eine Speicherkapazität aufweisen, die dazu geeignet ist, einen bis fünf, bevorzugt einen bis vier, besonders bevorzugt 2 bis drei, Brühzyklen durchzuführen, bevor ein Wiederaufladen der wiederaufladbaren Speichereinheit nötig wird.

Die Speicherkapazität der wiederaufladbare Speichereinheit für elektrische Energie kann mehr als 0 weniger als 100 Wh, bevorzugt von 1 bis 8 Wh, besonders bevorzugt von 2 bis 60 Wh, insbesondere von 3 bis 22 Wh, betragen.

In einer beispielhaften Ausführungsform weist die Speichereinheit eine Dimensionierung von 2000 W x 20 s = 40 kWs auf. Mit einer 24 V Spannungsversorgung bedeutet dies eine Speicherkapazität von ca. 0,5 Ah (12 Wh). Diese Speicherkapazität ist ausreichend, um den mindestens einen elektrischen Hochleistungsverbraucher zur Erhitzung von Wasser für mehrere aufeinanderfolgende Zubereitungen von Heißgetränken (Brühzyklen) elektrisch zu versorgen.

Als weiteres Beispiel wird für die Zubereitung eines Espresso mit 35 ml Wasser, welches von 15° auf 90°C erhitzt werden muss, eine Heizenergie von ca. 11 kJ benötigt. Dies entspricht einer erforderlichen Kapazität der Speichereinheit von 3 Wh. Als weiteres Beispiel darf die Zubereitung von 250 ml Teewasser genannt werden, welches ebenfalls beispielhaft von 15°C auf 90°C erhitzt wird. Hierzu wäre eine Kapazität der Speichereinheit von rund 22 Wh für ein Getränk erforderlich. Das Aufladen der Speichereinheit erfolgt insbesondere während Pausen und Nebenzeiten und kann auch während der Zubereitung des Heißgetränks stattfinden (d.h. zu diesem Zeitpunkt zusätzlich von der Netzversorgung gestützt werden). Da die Ausgabe von Teewasser im Verhältnis zu Kaffeegetränken sehr schnell (ohne Nebenzeiten wie z.B. der Versorgung der Brüheinheit mit Kaffeemehl) erfolgt, kann je nach Ausführungsform hier ein größerer Speicher notwendig sein um eine gewisse Anzahl Getränke auszugeben. Dies wäre dann ein Mehrfaches der beispielhaften 22 Wh (z.B. über 100 Wh für die Ausgabe von 5 Getränke in Folge).

Die wiederaufladbare Speichereinheit für elektrische Energie kann ausgewählt sein aus der Gruppe bestehend aus elektrische wiederaufladbare Speichereinheit, elektrochemischer wiederaufladbare Speichereinheit und Kombinationen hiervon, bevorzugt ausgewählt ist aus der Gruppe bestehend aus Akkumulator, reversible Brennstoffzelle, Kondensator und Kombinationen hiervon, besonders bevorzugt ausgewählt ist aus der Gruppe bestehend aus Li-lonen-Akkumulator, Blei-Akkumulator, Super-Cap-Kondensator und Kombinationen hiervon.

Vorteilhafterweise ist die mindestens eine wiederaufladbare Speichereinheit austauschbar, bevorzugt austauschbar im, am oder neben dem Getränkebereiter angeordnet. Gerade im Fall von absehbar längeren Betriebszeiten (Stoßbetriebszeiten) ist es vorteilhaft, wenn die wiederaufladbare Speichereinheit durch eine wiederaufladbare Speichereinheit mit größerer Kapazität getauscht werden kann oder durch weitere Speicherelemente für elektrische Energie erweitert werden kann. Damit kann die Maschine für eine Vielzahl an Kunden optimal ausgelegt werden und für eine kleinere Kundengruppen, bei denen das Getränkebereiter längere Stoßbetriebszeiten ohne Unterbrechung überstehen muss, dieser Speicher erweitert werden.

Ferner kann der Getränkebereiter mindestens eine weitere wiederaufladbare Speichereinheit für elektrische Energie enthalten, die bevorzugt über einen weiteren Transformator elektrisch mit dem Anschluss für ein externes Stromnetz verbunden ist.

Ferner kann die mindestens eine weitere wiederaufladbare Speichereinheit für elektrische Energie elektrisch mit der mindestens einen wiederaufladbaren Speichereinheit für elektrische Energie verbunden sein.

Darüberhinaus kann die weitere wiederaufladbare Speichereinheit für elektrische Energie dazu geeignet sein, Gleichspannung bereitzustellen, insbesondere eine Spannung von 5 bis 100 V, bevorzugt 10 bis 60 V, besonders bevorzugt 15 bis 42 V (Sicherheitskleinspannung), insbesondere Sicherheitskleinspannung im Bereich von 24 bis 40 V, bereitzustellen.

Zudem kann die weitere wiederaufladbare Speichereinheit für elektrische Energie dazu geeignet sein, eine elektrische Leistung abzugeben, die größer als 0 ist und weniger als 75%, bevorzugt weniger als 50%, besonders bevorzugt weniger als 25%, ganz besonders bevorzugt weniger als 15%, insbesondere weniger als 12%, optional weniger als 10%, der ersten elektrischen Leistung entspricht.

Ferner kann die weitere wiederaufladbare Speichereinheit für elektrische Energie dazu geeignet sein, eine elektrische Leistung abzugeben, die größer als 0 ist und weniger als 1 kW, bevorzugt 0,2 bis 0,9 kW, besonders bevorzugt 0,3 bis 0,8 kW, ganz besonders bevorzugt 0,4 bis 0,7 kW, insbesondere 0,5 bis 0,6 kW, beträgt.

In einer bevorzugten Ausgestaltungsform weist die weitere wiederaufladbare Speichereinheit für elektrische Energie eine Speicherkapazität auf, die höher ist als die Speicherkapazität der wiederaufladbaren Speichereinheit für elektrische Energie, bevorzugt eine Speicherkapazität von mindestens 10 Wh, bevorzugt mindestens 50 Wh, besonders bevorzugt mindestens 500 Wh, ganz besonders bevorzugt mindestens 1 kWh, insbesondere mindestens 5 kWh. Dies ermöglicht es, die weitere wiederaufladbare Speichereinheit für elektrische Energie (z.B. einen Bleiakku) langsam zu laden während kurzfristige, sehr hohen elektrische Leistungen aus der (schneller vollständig geladenen) Speichereinheit für elektrische Energie z.B. einem Lithiumionen-Akku oder einem elektrischen Kondensator) abgerufen werden können.

Die mindestens eine weitere wiederaufladbare Speichereinheit für elektrische Energie kann jedoch grundsätzlich auch die gleichen Merkmale wie die erfindungsgemäß in dem Getränkebereiter enthaltene wiederaufladbare Speichereinheit für elektrische Energie aufweisen.

Die weitere wiederaufladbare Speichereinheit für elektrische Energie kann somit auch ausgewählt sein aus der Gruppe bestehend aus elektrische wiederaufladbare Speichereinheit, elektrochemischer wiederaufladbare Speichereinheit und Kombinationen hiervon, bevorzugt ausgewählt ist aus der Gruppe bestehend aus Akkumulator, reversible Brennstoffzelle, Kondensator und Kombinationen hiervon, besonders bevorzugt ausgewählt ist aus der Gruppe bestehend aus Li-Ionen-Akkumulator, Blei-Akkumulator, Super-Cap-Kondensator und Kombinationen hiervon.

Es ist möglich, dass die weitere wiederaufladbare Speichereinheit für elektrische Energie eine elektrochemische, wiederaufladbare Speichereinheit ist (z.B. ein Akkumulator und/oder eine reversible Brennstoffzelle) und die wiederaufladbare Speichereinheit für elektrische Energie eine elektrische, wiederaufladbare Speichereinheit ist (z.B. ein Kondensator).

Es ist vorteilhaft, wenn der Getränkebereiter mit einer Ladeleistung bis hin zu 3 kW, bevorzugt im Bereich von 1 kW bis 1,3 kW, betrieben werden kann, da der Getränkebereiter damit auch in Ländern mit schwacher 1-Phasen-Netzversorgung (z.B. 100 V in Japan oder 120 V in den USA) mit jeweils ca. 1300 W (Japan) bzw. 1500 Watt (USA) unter maximaler Bezugsleistung ausreichend versorgt werden kann. Mit einer beispielhaften Anschlussleistung von 1 kW wäre es damit beispielsweise möglich, die Heizenergie von 2 kW für 20 Sekunden über einen Zyklus von einer Minute jeweils zwischen zu speichern. Damit könnte bei einem Verhältnis von zugeführter zu abgegebener Leistung von 1/3 jeweils 20 Sekunden ein Getränk zubereitet und 20+40 Sekunden für die Beladung des Speichers verwendet werden. Theoretisch wären damit sogar 3 kW Heizleistung möglich, ein gewisser Teil Restenergie ist jedoch auch für die übrigen Verbraucher notwendig. In Tabelle 1 ist beispielhaft der Verbrauch elektrischer Energie für diverse elektrische Verbraucher eines Getränkebereiters dargestellt.

**Tabelle 1: Elektrische Leistung für einen Brühzyklus ohne die Betrachtung energieintensiver Verbraucher (Erhitzer)**

| | Ansteuerzeit | Strom | Spannung | Leistung | Energie | |
|---|---|---|---|---|---|---|
| | [s] | [A] | [V] | [W] | [Ws] | [Wh] |
| Mühle | 6 | 8 | 24 | 192 | 1152 | 0,32 |
| Brühermotor | 5 | 6 | 24 | 144 | 720 | 0,20 |
| Brühermotor (verpressen) | 1 | 15 | 24 | 360 | 360 | 0,10 |
| Brühventil | 3 | 0,3 | 24 | 7,2 | 21,6 | 0,01 |
| Entspannventil | 3 | 0,3 | 24 | 7,2 | 21,6 | 0,01 |
| Pumpe | 20 | 4 | 24 | 96 | 1920 | 0,53 |
| | | | | Summe | 4195,2 | 1,17 |

Für z.B. 70 Tassen je Stunde wären damit für die Niederspannungsverbraucher ohne Erhitzersystem beispielhaft 70 x 1,17 Wh = 82 Wh Energie notwendig. Es wäre damit beispielhaft ein 24 V Speicherbaustein mit 3,4 Ah notwendig. Werden Getränke, wie zum Beispiel Milchkaffee oder Cappuccino zubereitet, so sind zu den beispielhaften, zuvor aufgeführten Verbrauchern zusätzliche elektrische Komponenten (z.B. Milchpumpen oder weitere Ventile) notwendig. Auch in diesem Fall sollte ggf. die weitere wiederaufladbare Speichereinheit so dimensioniert sein, dass ausreichend Energie für z.B. eine Stunde Stoßbetrieb zur Verfügung steht, wenn es nicht möglich ist, diese Speichereinheit in den kurzen Pausenzeiten zwischen den Getränken mit Energie zu regenerieren.

Auch die Grundversorgung des Getränkebereiters mit elektrischer Leistung für eine Anzeigeeinheit (Display), eine Steuereinheit oder elektrischer Sensoren kann über die oder eine weitere wiederaufladbare Speichereinheit erfolgen. Hier sind typischerweise elektrische Spannungen von 5V bis 24V üblich. Diese elektrischen Spannungen können direkt aus der wiederaufladbaren Speichereinheit bereitgestellt werden oder zur Anpassung der Spannung elektrische Spannungsregler zwischengeschaltet werden.

In einer bevorzugten Ausgestaltungsform ist der Getränkebereiter dadurch gekennzeichnet, dass der mindestens eine elektrische Hochleistungsverbraucher zur Erhitzung von Wasser nicht durch einen Heißwasserbehälter mit Wärmeenergie zur Erhitzung von Wasser versorgt wird. Diese Ausgestaltungsform ist vorteilhaft, da der Getränkebereiter somit mit in kleiner Bauweise bereitgestellt werden kann und die für das Aufheizen für den Heißwasserbehälter benötigte Wärmeenergie nicht nach dem Abschalten des Getränkebereiters verloren geht.

Der mindestens eine elektrische Hochleistungsverbraucher zur Erhitzung von Wasser kann eine elektrische Leistungsaufnahme aufweisen, die mindestens dem 1,5-fachen, bevorzugt mindestens dem 2-fachen, besonders bevorzugt mindestens dem 4-fachen, ganz besonders bevorzugt mindestens dem 6-fachen, insbesondere mindestens dem 8-fachen, optional mindestens dem 10-fachen, der ersten elektrischen Leistung entspricht.

Sind in dem Getränkebereiter mehrere Hochleistungsverbraucher vorhanden und werden diese Hochleistungsverbraucher elektrisch parallel (also zeitgleich) angesteuert, so kann die Summe der elektrischen Leistungen dieser Hochleistungsverbraucher die oben beschriebene minimale elektrische Leistungsaufnahme aufweisen.

Ferner kann der mindestens eine elektrische Hochleistungsverbraucher zur Erhitzung von Wasser einen Durchlauferhitzer enthalten oder daraus bestehen, bevorzugt einen Durchlauferhitzer mit einem Heizsystem ausgewählt aus der Gruppe bestehend aus Dickschichtheizsystem, Dünnschichtheizsystem, Blankschichtheizsystem, Blankdraht-Heizsysteme, Infrarotstrahlungsheizsystem, Mikrowellenstrahlungsheizsystem, Wasserkondensationsheizsystem, und Kombinationen hiervon. Der Vorteil eines Durchlauferhitzers ist, dass er verglichen mit anderen Heizeinheiten eine einfache Wartung und Entkalkung ermöglicht. Dies ist für den Benutzer sehr bequem und reduziert die Zeit, in welcher der Getränkebereiter aus Wartungsgründen nicht benutzt werden kann. Bei der Verwendung von Kleinspannungen bis 100V, insbesondere für den Betrieb von Blankdraht-Durchlauferhitzersysteme, können damit auch die notwendigen Isolationsstrecken verkürzt werden.

Der Getränkebereiter kann mindestens einen Temperatursensor aufweisen, wobei der mindestens eine Temperatursensor bevorzugt
i) innerhalb, stromaufwärts und/oder stromabwärts des mindestens einen elektrischen Hochleistungsverbrauchers zur Erhitzung von Wasser angeordnet ist; und/oder
ii) dazu konfiguriert ist, die elektrischen Leistung zu regulieren, die an dem mindestens einen elektrischen Hochleistungsverbraucher zur Erhitzung von Wasser bereitgestellt wird; und/oder
iii) ausgewählt ist aus der Gruppe bestehend aus NTC-Temperatursensor, PTC-Temperatursensor, IR-Sensor, Schallgeschwindigkeitssensor und Kombinationen hiervon.

Der Getränkebereiter kann mindestens einen Flusssensor aufweisen, wobei der mindestens eine Flusssensor bevorzugt
i) innerhalb, stromaufwärts und/oder stromabwärts des mindestens einen elektrischen Hochleistungsverbraucher zur Erhitzung von Wasser angeordnet ist; und/oder
ii) dazu konfiguriert ist, einen Volumenstrom von Wasser in dem mindestens einen elektrischen Hochleistungsverbraucher zur Erhitzung von Wasser zu regulieren; und/oder
iii) ausgewählt ist aus der Gruppe bestehend aus Flowmeter, US-basierter Durchflussmengenmesser, MID-basierter Durchflussmengenmesser und Kombinationen hiervon.

Der Getränkebereiter kann mindestens einen, optional mehrere, Niederleistungsverbraucher enthalten, wobei der mindestens eine Niederleistungsverbraucher bevorzugt ausgewählt ist aus der Gruppe bestehend aus Kaffeemühle, Brühermotor zum Verpressen von Kaffeemehl, Pumpe, Ventil, zentrale Steuereinheit, Bedieneinheit und Kombinationen hiervon.

Ferner ist der mindestens eine Niederleistungsverbraucher bevorzugt elektrisch mit einer weiteren wiederaufladbare Speichereinheit für elektrische Energie (z.B. einer mit den oben genannten Merkmalen) verbunden und wird insbesondere durch diese mit elektrischer Energie versorgt.

Der Getränkebereiter kann mindestens eine Steuerungselektronik enthalten, wobei die Steuerungselektronik bevorzugt dazu geeignet ist,
i) den aktuellen Ladezustand der wiederaufladbare Speichereinheit für elektrische Energie zu übermitteln, bevorzugt Informationen hierüber auszugeben und/oder zu senden, besonders bevorzugt Informationen hierüber auf einem Display des Getränkebereiters auszugeben und/oder über das Internet zu senden; und/oder
ii) eine Prognose für einen Ladungsbedarf der wiederaufladbare Speichereinheit für elektrische Energie von einem Benutzer zu empfangen und/oder basierend auf einer Statistik selbst zu erstellen, bevorzugt Informationen hierüber auszugeben und/oder zu senden, besonders bevorzugt Informationen hierüber auf einem Display des Getränkebereiters auszugeben und/oder über das Internet zu senden; und/oder
iii) Informationen zu empfangen, bevorzugt Informationen von einem Benutzer und/oder aus dem Internet, besonders bevorzugt Informationen von einem Benutzer und/oder aus dem Internet über einen Zeitpunkt, wann die wiederaufladbare Speichereinheit für elektrische Energie aufgeladen werden soll.

Die oben genannten Eigenschaften der Steuerungselektronik gelten natürlich entsprechend für jede weitere wiederaufladbare Speichereinheit für elektrische Energie, die in dem erfindungsgemäßen Getränkebereiter enthalten ist.

Ist die Steuerungselektronik des Getränkebereiters mit der (weiteren) wiederaufladbare Speichereinheit für elektrische Energie verbunden, so sind so auch z.B. aus der ferne Softwareupdates möglich, ohne dass der Getränkebereiter an der Stromversorgung angeschlossen oder eingeschaltet sein muss. Ferner kann z.B. der Energieversorger über das Netzkabel Informationen zur Beeinflussung des Ladezustands am Getränkebereiter abrufen und/oder diese je nach Energieverfügbarkeit beeinflussen.

Ferner wird die Verwendung eines erfindungsgemäßen Getränkebereiters zur Zubereitung eines Heißgetränks vorgeschlagen.

### Bezugszeichenliste

- 1, 1', 1":: wiederaufladbarer Speichereinheit für elektrische Energie;
- 2:: weiterer wiederaufladbare Speichereinheit für elektrische Energie;
- 3, 3':: elektrische Verbraucher mit einem hohen Leistungsbedarf (z.B. DC-Motor und/oder Heizeinheit);
- 4, 4', 4", 4′′′:: elektrischer Verbraucher mit einem niedrigen bis mittleren Leistungsbedarf;
- 5, 5':: Laderegler;
- 6:: Anschluss für ein externes Stromnetz (z.B. Hausnetzanschluss);
- 7:: externes Stromnetz (z.B. Stromversorgung vom Hausnetz);
- 8:: (imaginäre) Trennlinie von Getränkebereiter zum externen Stromnetz;
- 9:: Steuereinheit;
- 10:: drahtlose Verbindung (z.B. WiFi-Verbindung);
- 11:: Internet (z.B. Cloud-Speicher);
- 12:: Steuerungselektronik;
- a:: elektrische Leitung;
- b:: elektrische Leitung;
- c:: elektrische Leitung;
- d:: elektrische Leitung;
- e:: elektrische Leitung;
- f:: Kommunikationsleitung (z.B. Datenleitung);
- g:: Kommunikationsleitung (z.B. Datenleitung);
- h, h', h":: Kommunikationsleitung (z.B. Datenleitung);
- i:: elektrische Leitung.

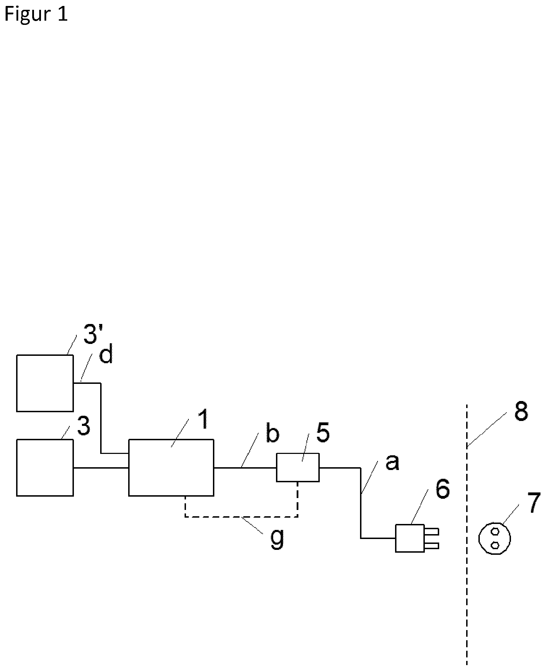

Figur 1 zeigt ein elektrisches Verschaltungsbild in einem erfindungsgemäßen Getränkebereiter. Zur elektrischen Ladung der wiederaufladbarer Speichereinheit 1 für elektrische Energie ist der Anschluss 6 für ein externes Stromnetz des Getränkebereiters an ein externes Stromnetz 7 angeschlossenen. Über einen Laderegler 5 und elektrische Leitungen a, b wird die wiederaufladbare Speichereinheit 1 für elektrische Energie geladen. An der Speichereinheit 1 für elektrische Energie sind elektrische Verbraucher 3, 3' mit einem hohen, kurzfristigen Leistungsbedarf angeordnet, welche über eine elektrische Leitung d mit elektrischer Leistung aus der Speichereinheit 1 für elektrische Energie versorgt werden. Dabei kann der Laderegler 5 mit der Speichereinheit 1 für elektrische Energie über eine Informationsleitung g kommunizieren und damit anhand seines Zustands eine optimale Ladung veranlassen.

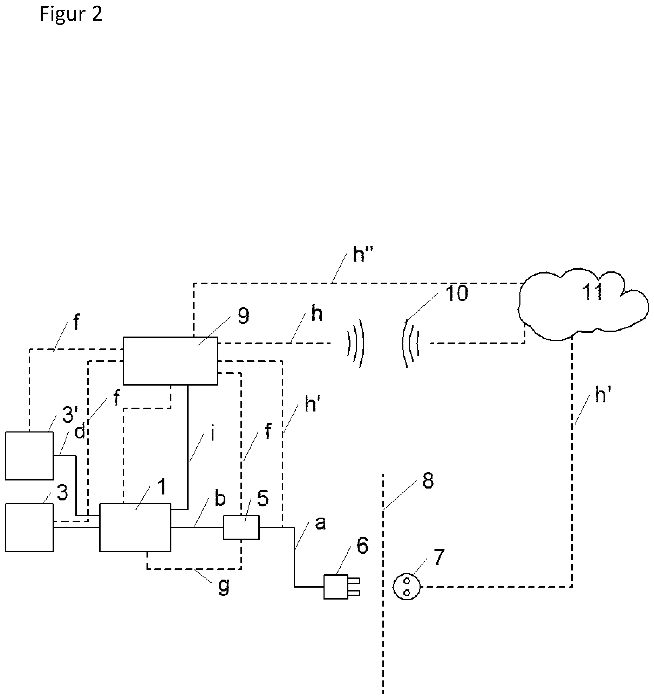

Figur 2 zeigt ein elektrisches Verschaltungsbild in einem weiteren erfindungsgemäßen Getränkebereiter. Dargestellt ist eine weitere Ausbaustufe des Getränkebereiters. Der Getränkebereiter weist hier eine Steuereinheit 9 auf, welche dazu konfiguriert ist, über Datenleitungen f mit der wiederaufladbarer Speichereinheit 1 für elektrische Energie und elektrischen Verbrauchern mit einem hohen, kurzfristigen Leistungsbedarf zu kommunizieren. Dabei können diese Komponenten angesteuert werden und es kann deren Ist-Zustand erfasst werden. Die Steuereinheit 9 kann in Betriebspausen auch bei unterbrochener Netzversorgung durch die wiederaufladbare Speichereinheit 1 für elektrische Energie versorgt werden. Ferner ist die Steuereinheit dazu geeignet, über eine Kommunikationsleitung h und eine drahtlose Verbindung 10 mit dem Internet 11 zu kommunizieren. Diese Kommunikation kann auch direkt über eine Kommunikationsleitung h" (z.B. eine LAN-Verbindung) realisiert sein. Bei einer Datenverbindung h' (z.B. Powerlink-Verbindung) über eine elektrische Leitung a zum externen Stromnetz 7 können auch Daten über das Stromnetz mit dem Internet ausgetauscht werden. Ist die Datenverbindung h' eine Powerlink-Verbindung, wird hierunter eine Kommunikationsverbindung verstanden, welche über die netzseitige Versorgung aufmodelliert wird und der Steuereinheit des Getränkebereiters Informationen liefern kann.

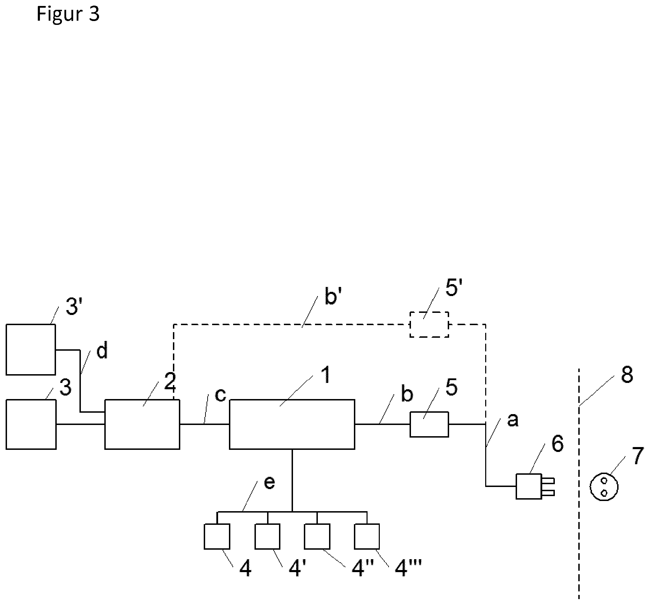

Figur 3 zeigt ein elektrisches Verschaltungsbild in einem weiteren erfindungsgemäßen Getränkebereiter. Dabei sind elektrische Verbraucher 4, 4', 4", 4′′′ mit einem niedrigen bis mittleren Leistungsbedarf an einer wiederaufladbaren Speichereinheit 1 für elektrische Energie angeschlossen und elektrische Verbraucher 3, 3' mit einem hohen Energiebedarf an die wiederaufladbare Speichereinheit 2 für elektrische Energie angeschlossen. Beispielhaft wird der Energiespeicher 2 von dem Energiespeicher 1 gespeist. Der Energiespeicher 2 kann in einer bevorzugten Ausführungsform auch direkt über eine elektrische Leitung b' mit einem passenden Laderegler 5' und über eine elektrische Leitung a an dem externen Stromnetz 7 angeschlossen sein, wobei in diesem Fall eine direkte Ladung des Energiespeichers 2 durch das externe Stromnetz 7 erfolgen kann (d.h. ohne Zwischenspeicherung über den weiteren Energiespeicher 2). Eine elektrische Verbindung c zwischen dem Energiespeicher 1 und dem weiteren Energiespeicher 2 ist damit nicht notwendig. Der weitere Energiespeicher 2 kann notwendig werden, wenn der Energiespeicher 1 die sehr hohen Ströme und Leistungen nicht kurzfristig aufgrund seines Innenwiderstand zur Verfügung stellen kann. Der weitere Energiespeicher 2 kann mehrfach vorhanden sein oder gar jedem Verbraucher ein einzelner weiterer Energiespeicher 2 zugeordnet sein. Über den Energiespeicher 1 lassen sich elektrische Verbraucher 4, 4', 4", 4′′′ mit mittlerem oder geringem Leistungsbedarf versorgen. Dabei ist es auch möglich, ohne die Funktion der elektrischen Verbraucher 4, 4', 4", 4‴ einzuschränken, für eine begrenzte Zeit, abhängig der Kapazität des Speicherbausteins, die Maschine vom externen Stromnetz 7 trennen. Bei der wiederaufladbaren Speichereinheit 1 für elektrische Energie kann aufgrund der langsameren Entladung und langsameren Ladung (gegenüber der weiteren wiederaufladbaren Speichereinheit 2 für elektrische Energie) dabei ein höherer Innenwiderstand akzeptiert werden.

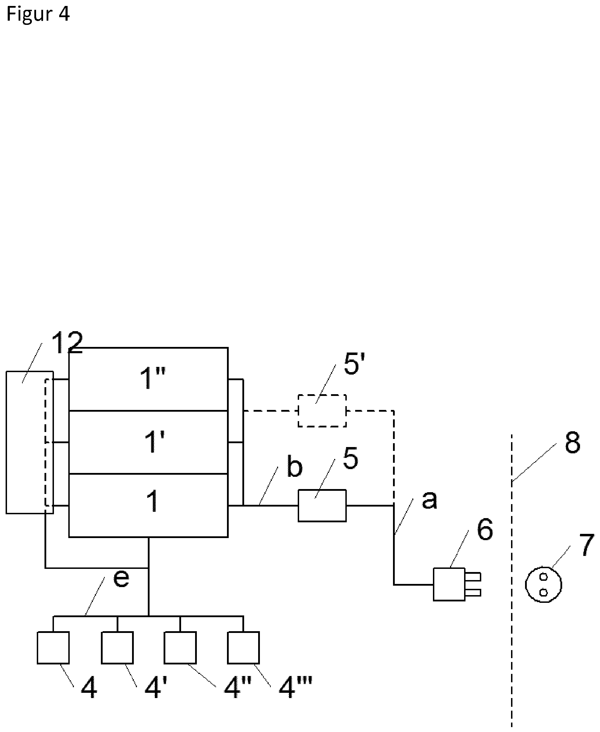

Fig. 4 zeigt ein elektrisches Verschaltungsbild in einem weiteren erfindungsgemäßen Getränkebereiter. Schematisch ist ein Getränkebereiter dargestellt, der mehrere (hier insgesamt drei) wiederaufladbare Speichereinheiten 1, 1', 1" für elektrische Energie enthält, die elektrisch parallel geschaltet sind. Diese können falls nötig natürlich um weitere wiederaufladbare Speichereinheiten für elektrische Energie erweitert werden. Dies kann beispielsweise dadurch passieren, indem mehrere dieser wiederaufladbare Speichereinheiten für elektrische Energie elektrisch parallel geschaltet werden. Hierfür kann der Getränkebereiter neben dem Laderegler 5 einen weiteren Laderegler 5' enthalten. Hier ist ausgangsseitig an den wiederaufladbaren Speichereinheiten 1, 1', 1" für elektrische Energie eine intelligente Steuerungselekronik 12 vorgesehen, welche die jeweiligen Speichereinheiten 1, 1', 1" für elektrische Energie (nacheinander) in Abhängigkeit von ihrem aktuellen Ladezustand beschaltet, beispielsweise ihre Entladung zulässt.

## Patentansprüche

1. Getränkebereiter zur Zubereitung von Heißgetränken, enthaltend
a) einen Anschluss (6) für ein externes Stromnetz (7) mit einer ersten maximalen elektrischen Leistung, wobei es sich bei dem Anschluss um einen 1-Phasen-Netzanschluss mit einer maximalen Anschlussleistung von 3 kW handelt;
b) mindestens eine wiederaufladbare Speichereinheit für elektrische Energie (1, 1', 1");
c) einen Transformator, der elektrisch mit dem Anschluss (6) für ein externes Stromnetz (7) und mit der wiederaufladbare Speichereinheit für elektrische Energie (1, 1', 1") verbunden ist; und
d) mindestens einen elektrischen Hochleistungsverbraucher (3, 3') zur Erhitzung von Wasser, wobei der mindestens eine elektrische Hochleistungsverbraucher (3, 3') eine elektrische Verbindung zur wiederaufladbaren Speichereinheit für elektrische Energie (1, 1', 1") aufweist und von dieser mit elektrischer Energie versorgt wird;
**dadurch gekennzeichnet, dass**
der mindestens eine elektrische Hochleistungsverbraucher (3, 3') zur Erhitzung von Wasser eine minimale elektrische Leistungsaufnahme aufweist, die höher ist als die erste maximale elektrische Leistung,
wobei die mindestens eine wiederaufladbare Speichereinheit für elektrische Energie (1, 1', 1") eine zweite maximale elektrische Leistung aufweist, die höher ist als die erste maximale elektrische Leistung, und dazu geeignet ist, eine elektrische Leistung von mindestens 6 kW bereitzustellen,
wobei der mindestens eine elektrische Hochleistungsverbraucher (3, 3') zur Erhitzung von Wasser nicht durch einen Heißwasserbehälter mit Wärmeenergie zur Erhitzung von Wasser versorgt wird, und
wobei der Anschluss (6) für das externe Stromnetz (7) an das externe Stromnetz (7) angeschlossen ist,
wobei der mindestens eine elektrische Hochleistungsverbraucher (3, 3') zur Erhitzung von Wasser einen Durchlauferhitzer enthält oder daraus besteht.

2. Getränkebereiter gemäß Anspruch 1, **dadurch gekennzeichnet, dass** der Anschluss (6) für das elektrische Stromnetz (7)
i) ein Anschluss für ein Wechselstromnetz ist, bevorzugt ein Wechselstromnetz mit einer Wechselspannung je Phase im Bereich von 100 V bis 255 V und besonders bevorzugt mit einer Frequenz von 50 bis 60 Hz; und/oder
ii) zusammen mit dem elektrischen Stromnetz dazu geeignet ist, eine elektrische Leistung je Phase von mehr als 0,5 kW, bevorzugt mindestens 1 kW, besonders bevorzugt mindestens 1,5 kW, ganz besonders bevorzugt mindestens 2 kW, insbesondere mindestens 2,5 kW, optional mindestens 3 kW, bereitzustellen.

3. Getränkebereiter gemäß einem der vorhergehenden Ansprüche, **dadurch gekennzeichnet, dass** der Getränkebereiter mindestens einen Laderegler (5, 5') enthält, der dazu ausgelegt ist, eine am Anschluss (6) für ein externes Stromnetz (7) anliegende Spannung derart zu wandeln, dass der mindestens eine elektrische Energiespeicher (1, 1') geladen werden kann.

4. Getränkebereiter gemäß dem vorhergehenden Anspruch, **dadurch gekennzeichnet, dass** der Laderegler (5, 5')
i) eine elektrische Verbindung zu dem Anschluss (6) für ein externes Stromnetz (7) aufweist; und/oder
ii) eine elektrische Verbindung zu der wiederaufladbare Speichereinheit für elektrische Energie (1, 1) aufweist; und/oder
iii) dazu geeignet ist, Wechselspannung in Gleichspannung, optional in eine pulsierende oder geglättete Gleichspannung, umzuwandeln.

5. Getränkebereiter gemäß einem der vorhergehenden Ansprüche, **dadurch gekennzeichnet, dass** die wiederaufladbare Speichereinheit für elektrische Energie (1, 1')
i) dazu geeignet ist, Gleichspannung bereitzustellen, insbesondere eine Spannung von 5 bis 100 V, bevorzugt 10 bis 60 V, besonders bevorzugt 15 bis 42 V, insbesondere Sicherheitskleinspannung im Bereich von 24 bis 40 V, bereitzustellen; und/oder
ii) dazu geeignet ist, eine elektrische Leistung abzugeben, die mindestens dem 4-fachen, bevorzugt mindestens dem 6-fachen, insbesondere mindestens dem 8-fachen, optional mindestens dem 10-fachen, der ersten elektrischen Leistung entspricht;
iii) dazu geeignet ist, eine elektrische Leistung von mindestens 12 kW, insbesondere mindestens 20 kW, optional mindestens 30 kW bereitzustellen; und/oder
iv) eine Speicherkapazität aufweist, die dazu geeignet ist, einen bis fünf, bevorzugt einen bis vier, besonders bevorzugt 2 bis drei, Brühzyklen durchzuführen, bevor ein Wiederaufladen der wiederaufladbaren Speichereinheit nötig wird; und/oder
v) eine Speicherkapazität von mehr als 0 und weniger als 100 Wh, bevorzugt von 1 bis 80 Wh, besonders bevorzugt von 2 bis 60 Wh, insbesondere von 3 bis 22 Wh, aufweist.

6. Getränkebereiter gemäß einem der vorhergehenden Ansprüche, **dadurch gekennzeichnet, dass** die wiederaufladbare Speichereinheit für elektrische Energie (1, 1') ausgewählt ist aus der Gruppe bestehend aus elektrische wiederaufladbare Speichereinheit, elektrochemischer wiederaufladbare Speichereinheit und Kombinationen hiervon, bevorzugt ausgewählt ist aus der Gruppe bestehend aus Akkumulator, reversible Brennstoffzelle, Kondensator und Kombinationen hiervon, besonders bevorzugt ausgewählt ist aus der Gruppe bestehend aus Li-lonen-Akkumulator, Blei-Akkumulator, Super-Cap-Kondensator und Kombinationen hiervon.

7. Getränkebereiter gemäß einem der vorhergehenden Ansprüche, **dadurch gekennzeichnet, dass** die mindestens eine wiederaufladbare Speichereinheit (1, 1') austauschbar ist, bevorzugt austauschbar im, am oder neben dem Getränkebereiter angeordnet ist.

8. Getränkebereiter gemäß einem der vorhergehenden Ansprüche, **dadurch gekennzeichnet, dass** der Getränkebereiter mindestens eine weitere wiederaufladbare Speichereinheit für elektrische Energie (2) enthält, die bevorzugt
i) über einen weiteren Transformator elektrisch mit dem Anschluss (6) für ein externes Stromnetz (7) verbunden ist; und/oder
ii) elektrisch mit der mindestens einen wiederaufladbaren Speichereinheit für elektrische Energie (1, 1') verbunden ist; und/oder
iii) dazu geeignet ist, Gleichspannung bereitzustellen, insbesondere eine Spannung von 5 bis 100 V, bevorzugt 10 bis 60 V, besonders bevorzugt 15 bis 42 V, insbesondere Sicherheitskleinspannung im Bereich von 24 bis 40 V, bereitzustellen; und/oder
iv) dazu geeignet ist, eine elektrische Leistung abzugeben, die größer als 0 ist und weniger als 75%, bevorzugt weniger als 50%, besonders bevorzugt weniger als 25%, ganz besonders bevorzugt weniger als 15%, insbesondere weniger als 12%, optional weniger als 10%, der ersten elektrischen Leistung entspricht; und/oder
v) dazu geeignet ist, eine elektrische Leistung abzugeben, die größer als 0 ist und weniger als 1 kW, bevorzugt 0,2 bis 0,9 kW, besonders bevorzugt 0,3 bis 0,8 kW, ganz besonders bevorzugt 0,4 bis 0,7 kW, insbesondere 0,5 bis 0,6 kW, beträgt; und/oder
vi) eine Speicherkapazität aufweist, die höher ist als die Speicherkapazität der wiederaufladbaren Speichereinheit für elektrische Energie, bevorzugt eine Speicherkapazität von mindestens 10 Wh, bevorzugt mindestens 50 Wh, besonders bevorzugt mindestens 500 Wh, ganz besonders bevorzugt mindestens 1 kWh, insbesondere mindestens 5 kWh.

9. Getränkebereiter gemäß dem vorhergehenden Anspruch, **dadurch gekennzeichnet, dass** die weitere wiederaufladbare Speichereinheit für elektrische Energie (2) ausgewählt ist aus der Gruppe bestehend aus elektrische wiederaufladbare Speichereinheit, elektrochemischer wiederaufladbare Speichereinheit und Kombinationen hiervon, bevorzugt ausgewählt ist aus der Gruppe bestehend aus Akkumulator, reversible Brennstoffzelle, Kondensator und Kombinationen hiervon, besonders bevorzugt ausgewählt ist aus der Gruppe bestehend aus Li-Ionen-Ackumulator, Blei-Akkumulator, Super-Cap-Kondensator und Kombinationen hiervon.

10. Getränkebereiter gemäß einem der vorhergehenden Ansprüche, **dadurch gekennzeichnet, dass** der mindestens eine elektrische Hochleistungsverbraucher (3, 3') zur Erhitzung von Wasser eine elektrische Leistungsaufnahme aufweist, die mindestens dem 1,5-fachen, bevorzugt mindestens dem 2-fachen, besonders bevorzugt mindestens dem 4-fachen, ganz besonders bevorzugt mindestens dem 6-fachen, insbesondere mindestens dem 8-fachen, optional mindestens dem 10-fachen, der ersten elektrischen Leistung entspricht.

11. Getränkebereiter gemäß einem der vorhergehenden Ansprüche, **dadurch gekennzeichnet, dass** der Getränkebereiter mindestens einen Temperatursensor aufweist, wobei der mindestens eine Temperatursensor bevorzugt
i) innerhalb, stromaufwärts und/oder des mindestens einen elektrischen Hochleistungsverbrauchers zur Erhitzung von Wasser angeordnet ist; und/oder
ii) dazu konfiguriert ist, die elektrischen Leistung zu regulieren, die an dem mindestens einen elektrischen Hochleistungsverbraucher zur Erhitzung von Wasser bereitgestellt wird; und/oder
iii) ausgewählt ist aus der Gruppe bestehend aus NTC-Temperatursensor, PTC-Temperatursensor, IR-Sensor, Schallgeschwindigkeitssensor und Kombinationen hiervon.

12. Getränkebereiter gemäß einem der vorhergehenden Ansprüche, **dadurch gekennzeichnet, dass** der Getränkebereiter mindestens einen Flusssensor aufweist, wobei der mindestens eine Flusssensor bevorzugt
i) innerhalb, stromaufwärts und/oder stromabwärts des mindestens einen elektrischen Hochleistungsverbraucher zur Erhitzung von Wasser angeordnet ist; und/oder
ii) dazu konfiguriert ist, einen Volumenstrom von Wasser in dem mindestens einen elektrischen Hochleistungsverbraucher zur Erhitzung von Wasser zu regulieren; und/oder
iii) ausgewählt ist aus der Gruppe bestehend aus Flowmeter, US-basierter Durchflussmengenmesser, MID-basierter Durchflussmengenmesser und Kombinationen hiervon.

13. Getränkebereiter gemäß einem der vorhergehenden Ansprüche, **dadurch gekennzeichnet, dass** Getränkebereiter mindestens einen, optional mehrere, Niederleistungsverbraucher (4, 4', 4", 4‴) enthält, wobei der mindestens eine Niederleistungsverbraucher (4, 4', 4", 4‴) bevorzugt
i) ausgewählt ist aus der Gruppe bestehend aus Kaffeemühle, Brühermotor zum Verpressen von Kaffeemehl, Pumpe, Ventil, zentrale Steuereinheit, Bedieneinheit und Kombinationen hiervon; und/oder
ii) elektrisch mit einer weiteren wiederaufladbare Speichereinheit für elektrische Energie verbunden ist und insbesondere durch diese mit elektrischer Energie versorgt wird.

14. Getränkebereiter gemäß einem der vorhergehenden Ansprüche, **dadurch gekennzeichnet, dass** der Getränkebereiter mindestens eine Steuerungselektronik (12) enthält, wobei die Steuerungselektronik (12) bevorzugt dazu geeignet ist,
i) den aktuellen Ladezustand der wiederaufladbare Speichereinheit für elektrische Energie (1, 1') zu übermitteln, bevorzugt Informationen hierüber auszugeben und/oder zu senden, besonders bevorzugt Informationen hierüber auf einem Display des Getränkebereiters auszugeben und/oder über das Internet (11) zu senden; und/oder
ii) eine Prognose für einen Ladungsbedarf der wiederaufladbare Speichereinheit für elektrische Energie (1, 1') von einem Benutzer zu empfangen und/oder basierend auf einer Statistik selbst zu erstellen, bevorzugt Informationen hierüber auszugeben und/oder zu senden, besonders bevorzugt Informationen hierüber auf einem Display des Getränkebereiters auszugeben und/oder über das Internet (11) zu senden; und/oder
iii) Informationen zu empfangen, bevorzugt Informationen von einem Benutzer und/oder aus dem Internet (11), besonders bevorzugt Informationen von einem Benutzer und/oder aus dem Internet (11) über einen Zeitpunkt, wann die wiederaufladbare Speichereinheit für elektrische Energie (1, 1') aufgeladen werden soll.

15. Verwendung eines Getränkebereiters gemäß einem der vorhergehenden Ansprüche zur Zubereitung eines Heißgetränks.

## Claims

1. A beverage maker for preparing hot beverages, including
a) a connector (6) for an external power supply system (7) having a first maximum electrical power, wherein the connector is a single phase power system with a maximum power rating of 3 kW;
b) at least one rechargeable storage unit for electrical energy (1, 1', 1");
c) a transformer that is electrically connected to the connector (6) for an external power supply system (7) and to the rechargeable storage unit for electrical energy (1, 1', 1"); and
d) at least one high-performance electrical consumer (3, 3') for heating water, wherein the at least one high-performance electrical consumer (3, 3') has an electrical connection to the rechargeable storage unit for electrical energy (1, 1', 1") and is supplied with electrical energy by it,
**characterized in that**
the at least one high-performance electrical consumer (3, 3') for heating water has a minimum electrical power consumption that is higher than the first maximum electrical power,
wherein the at least one rechargeable storage unit for electrical energy (1, 1', 1") has a second maximum electrical power that is higher than the first maximum electrical power, and is suitable to provide an electrical power of at least 6 kW,
wherein the at least one high-performance electrical consumer (3, 3') for heating water is not supplied with heat energy by a hot water container to heat water, and
wherein the connector (6) for the electrical power supply system (7) is connected to the electrical power supply system (7),
wherein the at least one high-performance electrical consumer (3, 3') for heating water comprises or consists of a continuous-flow water heater.

2. A beverage maker in accordance with claim 1, **characterized in that** the connector (6) for the electrical power supply system (7)
i) is a connector for an AC power supply system, preferably an AC power supply system having an AC voltage per phase in the range from 100 V to 255 V, and particularly preferably at a frequency of 50 to 60 Hz; and/or
ii) is suitable, together with the electrical power supply system, to provide an electrical power per phase of more than 0.5 kW, preferably of at least 1 kW, particularly preferably of at least 1.5 kW, very particularly preferably of at least 2 kW, and in particular of at least 2.5 kW, optionally of at least 3 kW.

3. A beverage maker in accordance with one of the preceding claims, **characterized in that** the beverage maker includes at least one charge regulator (5, 5') that is configured to convert a voltage applied to the connector (6) for an external power supply system (7) such that the at least one electrical energy store (1, 1') can be charged.

4. A beverage maker in accordance with the preceding claim, **characterized in that** the charge regulator (5, 5')
i) has an electrical connection to the connector (6) for an external power supply system (7); and/or
ii) has an electrical connection to the rechargeable storage unit for electrical energy (1, 1') ; and/or
iii) is suitable to convert AC voltage into DC voltage, optionally into a pulsated or smoothed DC voltage.

5. A beverage maker in accordance with one of the preceding claims, **characterized in that** the rechargeable storage unit for electrical energy (1, 1')
i) is suitable to provide DC voltage, in particular a voltage from 5 to 100 V, preferably 10 to 60 V, particularly preferably 15 to 42 V, in particular a safety low voltage in the range from 24 to 40 V; and/or
ii) is suitable to output an electrical power that corresponds to at least 4 times, preferably at least 6 times, in particular at least 8 times, optionally at least 10 times, the first electrical power;
iii) is suitable to provide an electrical power of at least 12 kW, in particular of at least 20 kW, optionally of at least 30 kW; and/or
iv) has a storage capacity that is suitable to carry out one to five, preferably one to four, particularly preferably two to three, brewing cycles before a recharging of the rechargeable storage unit becomes necessary; and/or
v) has a storage capacity of more than 0 and less than 100 Wh, preferably of 1 to 80 Wh, particularly preferably of 2 to 60 Wh, in particular of 3 to 22 Wh.

6. A beverage maker in accordance with one of the preceding claims, **characterized in that** the rechargeable storage unit for electrical energy (1, 1') is selected from the group consisting of an electrical rechargeable storage unit, an electrochemical rechargeable storage unit, and combinations thereof, is preferably selected from the group consisting of a rechargeable battery, a reversible fuel cell, a capacitor, and combinations thereof, and is particularly preferably selected from the group consisting of an Li-ion rechargeable battery, a lead acid rechargeable battery, a super cap capacitor, and combinations thereof.

7. A beverage maker in accordance with one of the preceding claims, **characterized in that** the at least one rechargeable storage unit (1, 1') is replaceable, is preferably replaceably arranged in, at, or next to the beverage maker.

8. A beverage maker in accordance with one of the preceding claims, **characterized in that** the beverage maker includes at least one further rechargeable storage unit for electrical energy (2) that, preferably,
i) is electrically connected to the connector (6) for an external power supply system (7) via a further transformer; and/or
ii) is electrically connected to the at least one rechargeable storage unit for electrical energy (1, 1'); and/or
iii) is suitable to provide DC voltage, in particular a voltage from 5 to 100 V, preferably 10 to 60 V, particularly preferably 15 to 42 V, in particular a safety low voltage in the range from 24 to 40 V; and/or
iv) is suitable to output an electrical power that is larger than 0 and less than 75%, preferably less than 50%, particularly preferably less than 25%, very particularly preferably less than 15%, in particular less than 12%, optionally less than 10%, of the first electrical power; and/or
v) is suitable to output an electrical power that is greater than 0 and less than 1 kW, preferably 0.2 to 0.9 kW, particularly preferably 0.3 to 0.8 kW, very particularly preferably 0.4 to 0.7 kW, in particular 0.5 to 0.6 kW; and/or
vi) has a storage capacity that is higher than the storage capacity of the rechargeable storage unit for electrical energy, preferably a storage capacity of at least 10 Wh, preferably at least 50 Wh, particularly preferably at least 500 Wh, very particularly preferably at least 1 kWh, in particular at least 5 kWh.

9. A beverage maker in accordance with the preceding claim, **characterized in that** the further rechargeable storage unit for electrical energy (2) is selected from the group consisting of an electrical rechargeable storage unit, an electrochemical rechargeable storage unit, and combinations thereof, is preferably selected from the group consisting of a rechargeable battery, a reversible fuel cell, a capacitor, and combinations thereof, and is particularly preferably selected from the group consisting of a Li-ion rechargeable battery, a lead acid rechargeable battery, a super cap capacitor, and combinations thereof.

10. A beverage maker in accordance with one of the preceding claims, **characterized in that** the at least one high-performance electrical consumer (3, 3') for heating water has an electrical power consumption that corresponds to at least 1.5 times, preferably at least 2 times, particularly preferably at least 4 times, very particularly preferably at least 6 times, in particular at least 8 times, optionally at least 10 times, the first electrical power.

11. A beverage maker in accordance with one of the preceding claims, **characterized in that** the beverage maker has at least one temperature sensor, wherein the at least one temperature sensor, preferably,
i) is arranged within, upstream and/or downstream of the at least one high-performance electrical consumer for heating water; and/or
ii) is configured to regulate the electrical power that is provided to the at least one high-performance electrical consumer for heating water; and/or
iii) is selected from the group consisting of a NTC temperature sensor, a PTC temperature sensor, an IR sensor, a sound velocity sensor, and combinations thereof.

12. A beverage maker in accordance with one of the preceding claims, **characterized in that** the beverage maker has at least one flow sensor, wherein the at least one flow sensor, preferably,
i) is arranged within, upstream and/or downstream of the at least one high-performance electrical consumer for heating water; and/or
ii) is configured to regulate a volume flow of water in the at least one high-performance electrical consumer for heating water; and/or
iii) is selected from the group consisting of a flow meter, a flow rate meter based on ultrasound, a flow rate meter based on MID, and combinations thereof.

13. A beverage maker in accordance with one of the preceding claims, **characterized in that** the beverage maker includes at least one, optionally a plurality of, low-voltage consumer(s) (4, 4', 4", 4‴), wherein the at least one low-voltage consumer (4, 4', 4", 4‴), preferably,
i) is selected from the group consisting of a coffee grinder, a brewer motor for pressing ground coffee, a pump, a valve, a central control unit, an operating unit, and combinations thereof; and/or
ii) is electrically connected to a further rechargeable storage unit for electrical energy and is in particular supplied with electrical energy by it.

14. A beverage maker in accordance with one of the preceding claims, **characterized in that** the beverage maker includes at least one control electronic system (12), wherein the control electronic system (12) is preferably suitable
i) to communicate the current charge state of the rechargeable storage unit for electrical energy (1, 1'), preferably to output and/or transmit information on it, particularly preferably to output information on it on a display of the beverage maker and/or to transmit it over the internet (11); and/or
ii) to receive a forecast for a charge requirement of the rechargeable storage unit for electrical energy (1, 1') from a user and/or to prepare it itself on the basis of statistics, preferably to output and/or transmit information on it, particularly preferably to output information on it on a display of the beverage maker and/or to transmit it over the internet (11); and/or
iii) to receive information, preferably information from a user and/or from the internet (11), particularly preferably information from a user and/or from the internet (11) on a point of time when the rechargeable storage unit for electrical energy (1, 1') should be charged.

15. Use of a beverage maker in accordance with one of the preceding claims for preparing a hot beverage.

## Revendications

1. Dispositif de préparation de boissons pour la préparation de boissons chaudes, comprenant
a) une prise (6) pour un réseau électrique extérieur (7) ayant une première puissance électrique maximale, laquelle prise est une prise secteur monophasée ayant une puissance connectée maximale de 3 kW ;
b) au moins une unité de stockage d'énergie électrique rechargeable (1, 1', 1") ;
c) un transformateur relié électriquement à la prise (6) pour un réseau électrique extérieur (7) et à l'unité de stockage d'énergie électrique rechargeable (1, 1', 1") ; et
d) au moins un consommateur électrique de grande puissance (3, 3') pour chauffer de l'eau, lequel au moins un consommateur électrique de grande puissance (3, 3') présente une liaison électrique avec l'unité de stockage d'énergie électrique rechargeable (1, 1', 1") et est alimenté en énergie électrique par celle-ci ;
**caractérisé en ce que**
ledit au moins un consommateur électrique de grande puissance (3, 3') pour chauffer de l'eau présente une consommation d'énergie électrique minimale supérieure à la première puissance électrique maximale,
ladite au moins une unité de stockage d'énergie électrique rechargeable (1, 1', 1") présentant une deuxième puissance électrique maximale supérieure à la première puissance électrique maximale et étant adaptée pour fournir une puissance électrique d'au moins 6 kW,
ledit au moins un consommateur électrique de grande puissance (3, 3') pour chauffer de l'eau n'étant pas alimenté en énergie thermique par un réservoir d'eau chaude pour chauffer de l'eau, et
la prise (6) pour le réseau électrique extérieur (7) étant connectée au réseau électrique extérieur (7),
ledit au moins un consommateur électrique de grande puissance (3, 3') pour chauffer de l'eau comprenant, ou étant constituée de, un chauffage instantané.

2. Dispositif de préparation de boissons selon la revendication 1, **caractérisé en ce que** la prise (6) pour le réseau électrique (7)
i.) est une prise pour un réseau à courant alternatif, de préférence un réseau à courant alternatif ayant une tension alternative par phase dans la plage de 100 V à 255 V et de façon particulièrement préférée une fréquence de 50 à 60 Hz ; et/ou
ii.) est adaptée ensemble avec le réseau électrique pour une puissance électrique par phase de plus de 0,5 kW, de préférence au moins 1 kW, de façon particulièrement préférée au moins 1,5 kW, de façon tout particulièrement préférée au moins 2 kW, en particulier au moins 2,5 kW, facultativement au moins 3 kW.

3. Dispositif de préparation de boissons selon l'une des revendications précédentes, **caractérisé en ce que** le dispositif de préparation de boissons comprend au moins un régulateur de charge (5, 5') conçu pour convertir une tension appliquée à la prise (6) pour un réseau électrique extérieur (7) afin de pouvoir charger ledit au moins un stockage d'énergie électrique (1, 1').

4. Dispositif de préparation de boissons selon la revendication précédente, **caractérisé en ce que** le régulateur de charge (5, 5')
i.) présente une liaison électrique avec la prise (6) pour un réseau électrique extérieur (7) ; et/ou
ii.) présente une liaison électrique avec l'unité de stockage d'énergie électrique rechargeable (1, 1) ; et/ou
iii.) est adapté pour convertir une tension alternative en une tension continue, facultativement en une tension continue pulsée ou lissée.

5. Dispositif de préparation de boissons selon l'une des revendications précédentes, **caractérisé en ce que** l'unité de stockage d'énergie électrique rechargeable (1, 1')
i.) est adaptée pour fournir une tension continue, en particulier une tension de 5 à 100 V, de préférence de 10 à 60 V, de façon particulièrement préférée de 15 à 42 V, en particulier une basse tension de sécurité dans la plage de 24 à 40 V ; et/ou
ii.) est adaptée pour délivrer une puissance électrique au moins égale à 4 fois, de préférence au moins 6 fois, en particulier au moins 8 fois, facultativement au moins 10 fois la première puissance électrique ;
iii.) est adaptée pour fournir une puissance électrique d'au moins 12 kW, en particulier au moins 20 kW, facultativement au moins 30 kW ; et/ou
iv.) présente une capacité de stockage adaptée pour effectuer un à cinq, de préférence un à quatre, de façon particulièrement préférée 2 à trois cycles d'infusion avant qu'il soit nécessaire de recharger l'unité de stockage rechargeable ; et/ou
v.) présente une capacité de stockage supérieure à 0 et inférieure à 100 Wh, de préférence de 1 à 80 Wh, de façon particulièrement préférée de 2 à 60 Wh, en particulier de 3 à 22 Wh.

6. Dispositif de préparation de boissons selon l'une des revendications précédentes, **caractérisé en ce que** l'unité de stockage d'énergie électrique rechargeable (1, 1') est choisie dans le groupe constitué par une unité de stockage électrique rechargeable, une unité de stockage électrochimique rechargeable et des combinaisons de celles-ci, de préférence est choisie dans le groupe constitué par un accumulateur, une pile à combustible réversible, un condensateur et des combinaisons de ceux-ci, de façon particulièrement préférée est choisie dans le groupe constitué par un accumulateur Li-ions, un accumulateur au plomb, un condensateur Super Cap et des combinaisons de ceux-ci.

7. Dispositif de préparation de boissons selon l'une des revendications précédentes, **caractérisé en ce que** ladite au moins une unité de stockage rechargeable (1, 1') est disposée de manière interchangeable, de préférence interchangeable dans, sur ou à côté du dispositif de préparation de boissons.

8. Dispositif de préparation de boissons selon l'une des revendications précédentes, **caractérisé en ce que** le dispositif de préparation de boissons comprend au moins une autre unité de stockage d'énergie électrique rechargeable (2) qui, de préférence,
i.) est reliée électriquement par le biais d'un autre transformateur à la prise (6) pour un réseau électrique extérieur (7) ; et/ou
ii.) est reliée électriquement à ladite au moins une unité de stockage d'énergie électrique rechargeable (1, 1') ; et/ou
iii.) est adaptée pour fournir une tension continue, en particulier une tension de 5 à 100 V, de préférence de 10 à 60 V, de façon particulièrement préférée de 15 à 42 V, en particulier une basse tension de sécurité dans la plage de 24 à 40 V ; et/ou
iv.) est adaptée pour délivrer une puissance électrique supérieure à 0 et inférieure à 75 %, de préférence inférieure à 50 %, de façon particulièrement préférée inférieure à 25 %, de façon tout particulièrement préférée à 15 %, en particulier inférieure à 12 %, facultativement inférieure à 10 % de la première puissance électrique ; et/ou
v.) est adaptée pour délivrer une puissance électrique supérieure à 0 et inférieure à 1 kW, de préférence de 0,2 à 0,9 kW, de façon particulièrement préférée de 0,3 à 0,8 kW, de façon tout particulièrement préférée de 0,4 à 0,7 kW, en particulier de 0,5 à 0,6 kW ; et/ou
vi.) présente une capacité de stockage supérieure à la capacité de stockage de l'unité de stockage d'énergie électrique rechargeable, de préférence une capacité de stockage d'au moins 10 Wh, de préférence au moins 50 Wh, de façon particulièrement préférée au moins 500 Wh, de façon tout particulièrement préférée au moins 1 kWh, en particulier au moins 5 kWh.

9. Dispositif de préparation de boissons selon la revendication précédente, **caractérisé en ce que** l'autre unité de stockage d'énergie électrique rechargeable (2) est choisie dans le groupe constitué par une unité de stockage rechargeable électrique, une unité de stockage rechargeable électrochimique et des combinaisons de celles-ci, de préférence choisie dans le groupe constitué par un accumulateur, une pile à combustible réversible, un condensateur et des combinaisons de ceux-ci, de façon particulièrement préférée choisie dans le groupe constitué par un accumulateur Li-ions, un accumulateur au plomb, un condensateur Super Cap et des combinaisons de ceux-ci.

10. Dispositif de préparation de boissons selon l'une des revendications précédentes, **caractérisé en ce que** ledit au moins un consommateur électrique de grande puissance (3, 3') pour chauffer de l'eau présente une consommation de puissance électrique au moins égale à 1,5 fois, de préférence au moins 2 fois, de façon particulièrement préférée au moins 4 fois, de façon tout particulièrement préférée au moins 6 fois, en particulier au moins 8 fois, facultativement au moins 10 fois la première puissance électrique.

11. Dispositif de préparation de boissons selon l'une des revendications précédentes, **caractérisé en ce que** le dispositif de préparation de boissons présente au moins un capteur de température, lequel au moins un capteur de température, de préférence,
i.) est disposé à l'intérieur, en amont et/ou en aval dudit au moins un consommateur électrique de grande puissance pour chauffer de l'eau ; et/ou
ii.) est configuré pour réguler la puissance électrique fournie audit au moins un consommateur électrique de grande puissance pour chauffer de l'eau ; et/ou
iii.) est choisi dans le groupe constitué par un capteur de température CTN, un capteur de température CTP, un capteur infrarouge, un capteur de vitesse du son et des combinaisons de ceux-ci.

12. Dispositif de préparation de boissons selon l'une des revendications précédentes, **caractérisé en ce que** le dispositif de préparation de boissons présente au moins un capteur de flux, lequel au moins un capteur de flux, de préférence,
i.) est disposé à l'intérieur, en amont et/ou en aval dudit au moins un consommateur électrique de grande puissance pour chauffer de l'eau ; et/ou
ii.) iest configuré pour réguler un débit volumétrique d'eau dans ledit au moins un consommateur électrique de grande puissance pour chauffer de l'eau ; et/ou
iii.) est choisi dans le groupe constitué par un débitmètre, un débitmètre à ultrasons, un débitmètre magnéto-inductif et des combinaisons de ceux-ci.

13. Dispositif de préparation de boissons selon l'une des revendications précédentes, **caractérisé en ce que** le dispositif de préparation de boissons comprend au moins un, facultativement plusieurs, consommateurs de faible puissance (4, 4', 4", 4‴), lequel au moins un consommateur de faible puissance (4, 4', 4", 4‴), de préférence,
i.) est choisi dans le groupe constitué par un moulin à café, un moteur d'infuseur pour comprimer du café moulu, une pompe, une vanne, une unité de commande centrale, une unité de service et des combinaisons de ceux-ci ; et/ou
ii.) est relié électriquement à une autre unité de stockage d'énergie électrique rechargeable et en particulier alimenté en énergie électrique par celle-ci.

14. Dispositif de préparation de boissons selon l'une des revendications précédentes, **caractérisé en ce que** le dispositif de préparation de boissons comprend au moins une électronique de commande (12), laquelle électronique de commande (12) est de préférence adaptée pour
i.) transmettre l'état de charge actuel de l'unité de stockage d'énergie électrique rechargeable (1, 1'), de préférence afficher et/ou envoyer des informations à ce sujet, de façon particulièrement préférée afficher des informations à ce sujet sur un afficheur du dispositif de préparation de boissons et/ou les envoyer par Internet (11) ; et/ou
ii.) recevoir d'un utilisateur une prévision de besoin de charge pour l'unité de stockage d'énergie électrique rechargeable (1, 1') et/ou la déterminer lui-même sur la base d'une statistique, de préférence afficher et/ou envoyer des informations à ce sujet, de façon particulièrement préférée afficher des informations à ce sujet sur un afficheur du dispositif de préparation de boissons et/ou les envoyer par Internet (11) ; et/ou
iii.) recevoir des informations, de préférence des informations d'un utilisateur et/ou venant d'Internet (11), de façon particulièrement préférée des informations d'un utilisateur et/ou venant d'Internet (11) concernant un point du temps où l'unité de stockage d'énergie électrique rechargeable (1, 1') doit être chargée.

15. Utilisation d'un dispositif de préparation de boissons selon l'une des revendications précédentes pour préparer une boisson chaude.
